# EUROPÄISCHE PATENTANMELDUNG

(11) **EP 4 177 491 A1**
(43) Veröffentlichungstag der Anmeldung: **10.05.2023**
(21) Anmeldenummer: 22000227.3
(22) Anmeldetag: 08.10.2022
(51) Int. Cl.: F16C 29/02, B30B 1/40, B21D 37/12, B21D 19/08, B21D 28/32

(54) **KEILTRIEB ZUM REVERSIBLEN VORSCHIEBEN EINES METALLBEARBEITUNGSWERKZEUGS UND ZYKLENWERKZEUG ZUM BEARBEITEN EINES WERKSTÜCKS**

(30) Priorität: 13.10.2021 DE 202021003189 U
(71) Anmelder: Strack Norma GmbH & Co. KG, 58511 Lüdenscheid (DE)
(72) Erfinder: Fontein, Petra, 51491 Overath (DE)

(57) **Zusammenfassung**

Die vorliegende Erfindung betrifft einen Keiltrieb (10) zum reversiblen Vorschieben eines Metallbearbeitungswerkzeugs (100), mit einer Schieberelementaufnahme (12) und einer Führung (14) zum Vorschieben in Schubrichtung (X) eines das Werkzeug (100) abstützenden Schieberelements (16) in Bezug auf die Schieberelementaufnahme (12) auf einem vorbestimmten Weg, wobei die Führung (14) zum Abstützen des Schieberelements (16) eine in Schubrichtung (X) ausgerichtete Gleitfläche (18) aufweist. Um den Vorschubweg bei bauartbegrenztem Hub des Metallbearbeitungswerkzeugs (100) zu verlängern, wird vorgeschlagen, dass die Führung (14) in Schubrichtung (X) gesehen mindestens zwei hintereinander angeordnete Gleitflächen (18) umfasst.

Die vorliegende Erfindung betrifft auch ein Zyklenwerkzeug zum Bearbeiten eines Werkstücks mit einem Keiltrieb (10).

## Beschreibung

Die vorliegende Erfindung bezieht sich auf einen Keiltrieb. Solche gattungsgemäßen Keiltriebe werden verwendet, um beispielsweise eine in etwa vertikal in ein Zyklenwerkzeug eingebrachte Bewegungsenergie quer dazu in Schubrichtung umzulenken.

Zyklenwerkzeuge sind nach dieser Erfindung beispielsweise Press-, Stanz- oder Umformwerkzeuge mit hin- und hergehenden Werkzeugkomponenten. Während eines Arbeitstakts wird die Bewegungsenergie von zum Beispiel einem Oberteil einer Presse auf ein Metallbearbeitungswerkzeug, zum Beispiel einem Maschinenmesser übertragen, um ein Werkstückteil auszustanzen. Das Metallbearbeitungswerkzeug ist an einem Schieberelement festgelegt, das im Arbeitstakt mittels einer Führung auf einer vorbestimmten Bahn in Bezug auf eine Schieberelementaufnahme vorgeschoben werden kann. In einem weiteren Arbeitstakt bewegt sich das Schieberelement wieder zurück in seine Ausgangslage und der Zyklus beginnt nach einem Wechsel des Werkstücks von neuem. Solche Durchlaufverfahren werden zum Beispiel in der Automobilindustrie zum Herstellen von Karosserieteilen eingesetzt.

Es sind vielfältige Führungen offenbart worden, die eine Bahn für den Vorschub des Schieberelements in Bezug auf die Schieberelementaufnahme vorgeben. Die DE 10 2008 061420 A1 schlägt zum Beispiel ein Schieberbett vor, das durch seitlich angebrachte durchgehende Leisten den Vorschubweg festlegt. Die Kontaktflächen zwischen Schieberelement und Schieberelementaufnahme sind mit Gleitflächen belegt. Um eine sehr hohe Standzeit solcher Keiltriebe nach dem Stand der Technik zu gewährleisten, sind hier in Schubrichtung durchgehende, einteilige Gleitflächen aus hochwertigen Gleitlagermaterialien verbaut.

Da die Bewegungsenergie im Arbeitstakt aus einer Richtung und räumlich begrenzt in den Keiltrieb eingeleitet wird, kann man auf eine durchgehende Gleitfläche verzichten. Erst am Ende der Vorschubbewegung - beziehungsweise auf dem letzten Drittel - kommt das Metallbearbeitungswerkzeug mit dem Werkstück in Eingriff oder Wirkkontakt. Erst jetzt entstehen hohe Kippmomente, die von den Gleitlagern abgefangen werden müssen.

Besonders nachteilig ist an dieser vorbekannten Form des Schieberelements, dass lediglich, eine in Schubrichtung gesehen, durchgehende Gleitfläche vorhanden ist. Mit zunehmender Fertigungskomplexität sind meist mehrere Keiltriebe in einem Zyklenwerkzeug kombiniert. Dies führt unweigerlich zu Platzproblemen und macht eine Platzierung der Keiltriebe erheblich entfernt vom Einsatzpunkt des Metallbearbeitungswerkzeugs erforderlich. Muss dann zum Beispiel in Schubrichtung eine längere Entfernung zum Werkstück überbrückt werden, so gäbe es zwei Möglichkeiten. Verlängert man lediglich das Metallbearbeitungswerkzeug, das am Schieberelement angesetzt ist, durch ein Zwischenstück, so können durch auftretende Seitenkräfte Schwingungen und Deformationen auftreten, die zu hohem Verschleiß und Beschädigungen führen. Eine hochexakte Positionierung des Bearbeitungswerkzeugs ist insbesondere bei hohen Arbeitsdrücken und kurzen Zyklen mit hoher Bewegungsdynamik nicht mehr möglich. Durch die Verlängerung mit dem Zwischenstück wird das Metallbearbeitungswerkzeug zudem schwerer und belastet zusätzlich die Gleitflächen.

Wollte man den Vorschubweg verlängern, so baut der Keiltrieb immer höher auf und kann bei bauartbegrenztem Hub des Zyklenwerkzeugs nur kleinere Entfernungen überbrücken oder passt sonst nicht mehr in das Zyklenwerkzeug.

Es ist daher eine Aufgabe der vorliegenden Erfindung, einen verbesserten Keiltrieb anzugeben, der mit technisch einfachen Mitteln die vorstehend genannten Nachteile vermeidet.

Diese Aufgabe wird mit den Merkmalen des Hauptanspruchs gelöst.

Kern der Erfindung ist es, das das Metallbearbeitungswerkzeug tragende Schieberelement zu verlängern, bei gleichzeitig unveränderter Bauhöhe des Keiltriebs. Dazu wird vorgeschlagen, dass die Führung in Schubrichtung gesehen mindestens zwei hintereinander angeordnete Gleitflächen umfasst. Die Gleitflächen können sich dabei überlappen und bei gleicher Bauhöhe des Schieberelements eine verlängerte Schieberführung definieren. Die Gleitflächen können in entsprechende Vertiefungen im Schieberelement oder anders herum in der Schieberelementaufnahme angebracht sein. Die Gleitflächen können dabei auch gekippt zur Schubrichtung verlaufen, da nunmehr eine vergrößerte Gleitfläche bereitgestellt ist. Die Schubrichtung des Schieberelements verläuft quer zur eingebrachten Bewegungsenergie und kann ein an das Werkstück angepasster Wirkwinkel sein.

Durch Teilung der Gleitfläche in Schubrichtung können auch Gleitlager mit geringerer Güte an Stellen angeordnet sein, die lediglich eine Führungsfunktion, nicht aber eine Lastaufnahmefunktion haben. Durch die Teilung der Gleitfläche ändert sich auch die Eigenfrequenz des Schieberelements oder der Schieberelementaufnahme. Ton und Lautstärke beim Arbeitstakt verändern sich.

Ist ein Freiraum zwischen zwei aufeinanderfolgenden und voneinander beabstandeten Gleitflächen vorgesehen, kann wenigstens ein Stück Gleitlager eingespart werden. In den Freiraum kann das Schieberelement beim Einnehmen einer Startposition oder einer Endposition im Arbeitstakt eingeschoben werden. Diese ermöglicht bei gleicher oder nahezu gleicher Bauhöhe des Keiltriebs eine Verlängerung der Schieberführung. Ohne dass das Metallbearbeitungswerkzeug verändert werden müsste, wird das Bearbeitungswerkzeug mit vergrößerter Entfernung vom Keiltrieb und näher zum Werkstück geführt und abgestützt.

Ein weitere Ausführungsform sieht vor, dass ein Versatz zwischen den Gleitflächen besteht, wobei die Gleitflächen versetzt und in etwa parallel zur Schubrichtung angeordnet sind. Die Schieberaufnahme und das Schieberelement sind komplementär zueinander geformt und bilden im Seitenprofil zum Beispiel eine Sägezahnform aus. Die auf eine erste Gleitfläche folgende Gleitfläche ist zum Beispiel so versetzt, dass der Startpunkt der folgenden Gleitfläche in etwa auf gleicher Höhe mit dem Startpunkt der ersten Gleitfläche liegt.

Um zum Beispiel unterschiedliche Entfernungen zwischen dem erfindungsgemäßen Keiltrieb und dem Werkstück überbrücken zu können, kann es vorteilhaft sein, dass der Freiraum oder der Versatz konstant ist oder zwischen mehreren aufeinanderfolgenden Gleitflächen variiert. Dazu könnte das Schieberelement und die Schieberelementaufnahme aus Segmenten unterschiedlicher Länge zusammengesetzt sein, um einen vorbestimmten Abstand zwischen dem Metallbearbeitungswerkzeug und dem Werkstück im Arbeitstakt einzustellen. Dabei variiert eventuell auch die Anzahl der aufeinanderfolgenden Gleitflächen und /oder deren Gleitflächenlänge.

Vorteilhafter Weise ist am Ende der Schieberelementaufnahme ein Endstück vorgehen, das ein Vorschieben des Schieberelements begrenzt. Dies kann zum Beispiel von einer Verbindungsfläche am Schieberelement ausgebildet sein, welche den Freiraum oder den Versatz definiert.

Das Endstück bildet vorteilhafter Weise den Versatz aus und legt den Freiraum fest, wobei die Gleitfläche mit der in Schubrichtung direkt anschließenden Verbindungsfläche am Schieberelement einen Winkel von etwa 45° bis etwa 90° und bis zu etwa 135° einschließt. Bei einem Winkel von etwa 90° bildet sich eine an Treppenstufen erinnernde Anordnung aus. Bei einem stumpfen Winkel ist im Freiraum Platz für einen Anschlag, vorzugsweise aus einem dauerelastischen Material.

Eine weitere Aufgabe der vorliegenden Erfindung ist es, ein verbessertes Zyklenwerkzeug zum Bearbeiten eines Werkstücks anzugeben, wobei ein vom Metallbearbeitungswerkzeug beim Arbeitstakt abgetrenntes Werkstückteil vom Werkstück in einen unterhalb des Werkstücks angeordneten Schacht des Zyklenwerkzeugs fällt.

Erfindungsgemäß ist das Metallbearbeitungswerkzeug an einem Schieberelement eines Keiltriebs mit den vorstehend beschriebenen technischen Merkmalen befestigt. Dieser muss innerhalb des Zyklenwerkzeugs angeordnet sein, um während des Arbeitstakts die Bewegungsenergie umzulenken und auf das Metallbearbeitungswerkzeug einwirken zu lassen. Da der Keiltrieb dabei nicht im Schacht stehen kann, bildet sich ein Abstand zwischen Keiltrieb und Werkstück, wenn es im Zyklenwerkzeug eingebracht ist. Mittels der verlängerten Führung gemäß der vorliegenden Erfindung können sowohl die Breite des Schachts als auch noch größere Abstände zwischen Werkstück und Keiltrieb überwunden werden. Das Metallbearbeitungswerkzeug wird durch das verlängerte und geführte Schieberelement bis auf wenige Zentimeter an das Werkstück herangeführt und abgestützt.

Durch die verlängerte Führung wird der Verschleiß mittels der Mehrzahl von Gleitflächen reduziert und die Seitenkräfte gut abgefangen. Mit Hilfe des verlängerten Schieberelements des erfindungsgemäßen Zyklenwerkzeugs wird trotz erhöhtem Abstand des Keiltriebs vom Werkstück die Positionierungspräzision zumindest erhalten. Durch die Erhöhung des Abstands des Keiltriebs zum Werkstück können innerhalb eines Zyklenwerkzeugs erheblich mehr Keiltriebe gleichzeitig eingesetzt werden und eine höhere Fertigungstiefe bei verkürzter Produktionszeit erreicht werden. Einteilige Schieberelemente und Schieberelementaufnahmen können ohne erheblichen Fertigungsaufwand und kostengünstig mit bis zu etwa 50cm Länge erstellt werden. Gußteile werden zum Beispiel entsprechend nachgearbeitet und mit Gleitflächen belegt.

Weitere vorteilhafte Ausführungsformen der Erfindung ergeben sich aus den beiliegenden Zeichnungen. Die Erfindung wird nun anhand von Ausführungsbeispielen mit Bezug auf die beiliegenden Zeichnungen näher beschrieben.

In den Zeichnungen zeigen:
- Fig. 1: eine schematische Schnittansicht eines ersten Ausführungsbeispiels eines erfindungsgemäßen Keiltriebs in Endposition des Arbeitstakts;
- Fig. 2a: eine Seitenansicht eines Teils eines Keiltriebs nach einem zweiten Ausführungsbeispiel;
- Fig.2b: eine Teilansicht eines erfindungsgemäßen Keiltriebs eines dritten Ausführungsbeispiels; und
- Fig. 3: eine teilgeschnittene Seitenansicht eines Zyklenwerkzeugs gemäß dieser Erfindung.

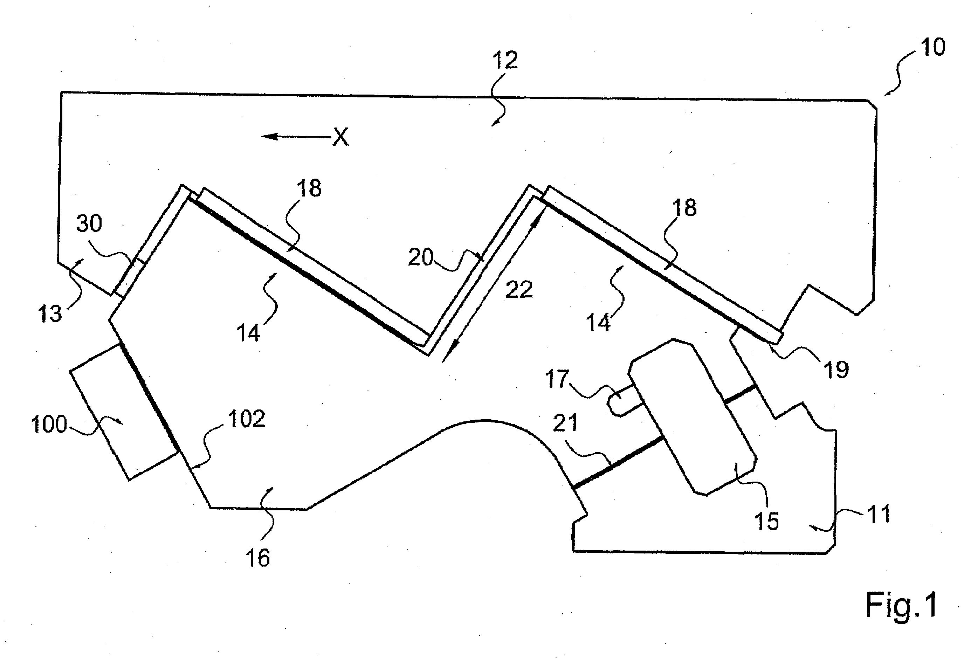

Soweit im Folgenden nichts Anderes gesagt ist, bezieht sich die nachfolgende Beschreibung stets auf alle Ausführungsbeispiele der Figuren 1 bis 3, wobei gleiche Bezugszeichen dieselben konstruktiven Merkmale beschreiben.

In Figur 1 ist ein Keiltrieb 10 zum reversiblen Vorschieben eines Metallbearbeitungswerkzeugs 100 gezeigt. Eine dafür notwendige Antriebsenergie ist in Figur 1 quer zur Schubrichtung X ausgerichtet und von einer Schieberelementaufnahme 12 aufgenommen, wobei die Schieberelementaufnahme 12 in Richtung Schieberelement 16 gedrückt wird. Ein sogenannter Treiber 11 wirkt dabei als eine Art Gegenlager und ist mit einer Seitenführung 15 verschiebbar am Schieberelement 16 befestigt. Dieser Treiber 11 wird im Kanal 17 des Schieberelements geführt und treibt das Schieberelement 16 in Schubrichtung X nach links, wobei das Metallbearbeitungswerkzeug 100 vorwärts geschoben wird. Ist die Antriebsenergie nicht mehr vorhanden, so sorgt ein Rückstellmechanismus dafür, dass die Schieberaufnahme 12 wieder gemäß Figur 1 nach oben bewegbar ist und das Schieberelement 16 nach rechts auf eine Ausgangsposition gezogen ist. Der Rückstellmechanismus ist eine Feder und/oder Gasdruckfeder.

Diese reversible Bewegung ermöglicht eine Führung 14 zum Vorschieben in Schubrichtung X eines das Werkzeug 100 abstützenden Schieberelements 16 in Bezug auf die Schieberelementaufnahme 12 auf einem vorbestimmten Weg. Die Führung 14 weist zum Abstützen des Schieberelements 16 eine in Schubrichtung X ausgerichtete Gleitfläche 18 auf, die bei diesem Ausführungsbeispiel an der Schieberelementaufnahme 12 festgelegt ist. Alternativ kann die Gleitfläche 18 zusätzlich oder nur am Schieberelement 16 vorgesehen sein. Auch ist ein Zusammenwirken der Gleitfläche 18 mit einer am Gegenstück eingebrachten Sinterschicht aus Gleitlagermaterial, zum Beispiel aus einer Bronzelegierung, möglich. Die Führung 14 in Schubrichtung X gesehen umfasst zwei hintereinander angeordnete Gleitflächen 18, die in etwa parallel zueinander ausgerichtet sind. Die Schieberelementaufnahme 12 und das Schieberelement 16 sind ähnlich zur Seitenführung 15 gegeneinander verschiebbar miteinander verbunden.

Die Antriebsenergie wird dadurch in ihrer Richtung in Schubrichtung X umgelenkt, wobei die erheblichen Schubkräfte auf mehrere Gleitflächen 18 verteilt sind. Die in Figur 1 links gezeigte, zum Metallbearbeitungswerkzeug 100 näher angeordnete Gleitfläche 18, fängt dabei die auftretenden Druckkräfte ab, die beim Eingriff des Werkzeugs 100 - beispielsweise einem Stanzmesser - an dem Werkstück auftreten. Das Schieberelement 16 weist zudem eine Werkzeugplatte 102 zum Befestigen und zum Ausrichten des Metallbearbeitungswerkzeugs 100 auf.

Die hintereinander angeordneten Gleitflächen 18 sind auf die auftretenden Kräfte am Einbauort abstimmbar und erhöhen die Standzeit des erfindungsgemäßen Keiltriebs 10. Die gegenüber dem Treiber 11 angeordnete Gleitfläche 18 muss für Standzeiten von mehreren 100.000 Zyklen besonders hochwertig ausgeführt sein. Bei anderen nachfolgenden Gleitflächen 18 ist eventuell ein geringer Reibwiderstand wichtig.

Anders als bei handelsüblichen Keiltrieben 10 ist ein Freiraum 20 zwischen zwei - in Schubrichtung x gesehen - aufeinanderfolgenden Gleitflächen 18 vorgesehen. Im Unterschied zu einer einteiligen, durchgehenden Gleitfläche 18 bei Standard-Normalien sind die Gleitflächen 18 der erfindungsgemäßen Keiltriebe 10 voneinander beabstandet. Da die Belastungen und Kräfte entlang der Schubrichtung X zwischen der Schieberelementaufnahme 12 und dem Schieberelement 16 variieren, können somit Gleitflächen 18 an Stellen mit geringer Belastung eingespart und unterschiedliche Materialien für aufeinanderfolgende Gleitflächen 18 je nach Belastungsart eingesetzt werden. Auch die Gleitflächen 18 nach dieser Erfindung können in Schubrichtung X gesehen einen Querschnitt in Prismenform aufweisen. Eine Gleitfläche 18 ist in Schubrichtung X gesehen an einer Vorderkante mit einem Anlauf 30 versehen. Dies reduziert mögliche Reibungsverluste.

In Figur 1 ist der Keiltrieb 10 am Ende des Arbeitstakts mit maximal vorgeschobenem Metallbearbeitungswerkzeug 100 gezeigt. Ein Teilstück des Schieberelements 16 zeigt dabei in Richtung eines Endstücks 13 der Schieberelementaufnahme 12, das den Vorschub in Schubrichtung X begrenzt. Zwischen dem Endstück 13 und dem Teilstück des Schieberelements 16 ist ein Anschlag 30 aus elastischem Material zum Abfangen von Stoßkräften montiert.

Wie in Figur 1 zu sehen ist, ist ein Versatz 22 zwischen den Gleitflächen 18 angeordnet, wobei die Gleitflächen 18 versetzt sind, jedoch in etwa parallel zur Schubrichtung X ausgerichtet sind. Anders als bei einer einteilig in Schubrichtung X angebrachten Gleitfläche 18 ist so eine Verlängerung der Führung 14 in Schubrichtung X herzustellen, ohne dass der Keiltrieb 10 dabei an Bauhöhe zunimmt.

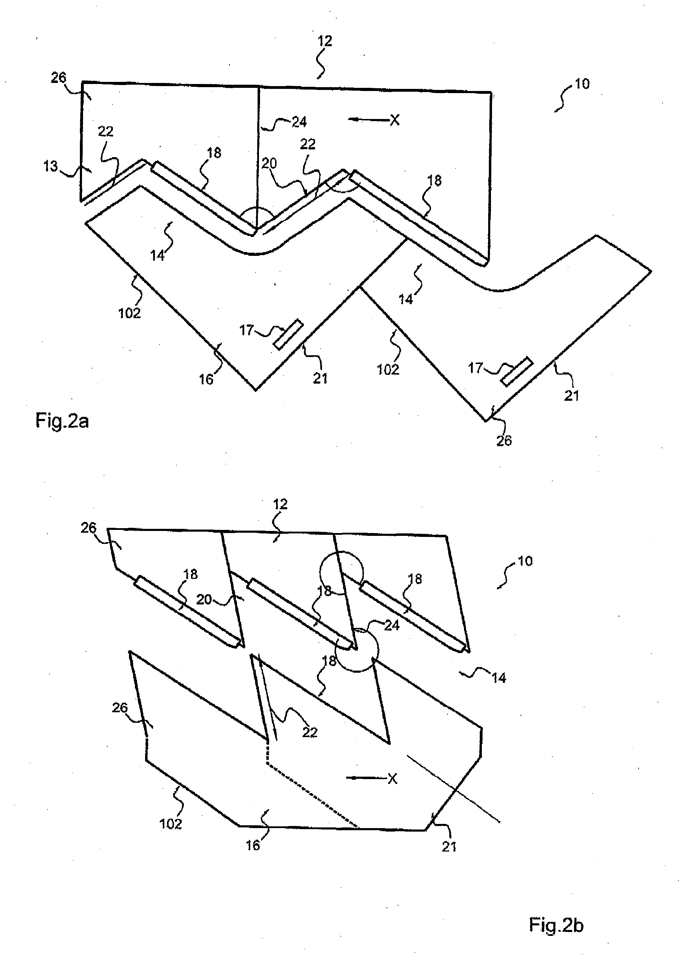

Bei dem in Figur 2a gezeigten Keiltrieb 10 ist die Schieberelementaufnahme 12 wie auch das Schieberelement 16 aus Segmenten 26 zusammengebaut. Diese Normalien können sich zum Beispiel in der Art, Form und Länge der Gleitflächen 18 unterscheiden. Auch können der Versatz 22 und somit auch der Freiraum 20 zwischen den aufeinanderfolgenden Gleitflächen 18 variieren. Das Schieberelement 16 ist entsprechend komplementär zur Schieberelementaufnahme 12 aus Segmenten 26 zusammengesetzt. An einer Verbindungsfläche 24 sind die Segmente 26 lösbar miteinander verbunden, insbesondere verschraubt, um bei Erreichen der Verschleißgrenze lediglich diese Segmente 26 vor Ort auszutauschen. Das in Schubrichtung X zuletzt angesetzte Segment 26 der Schieberelementaufnahme 12 bildet das Endstück 13. Jedes Segment 26 für das Schieberelement 16 weist eine Schubfläche 21 zum Ansetzen des Treibers 11 mit entsprechend benachbart angeordnetem Kanal 17 auf. Eine weitere Seite des Segments 26 für das Schieberelement 16 ist mit einer Werkzeugplatte 102 ausgestattet oder vorzugsweise zur Montage einer solchen Werkzeugplatte 102 für das Metallbearbeitungswerkzeug 100 vorbereitet.

Ein Vergleich der in Figuren 1 bis 2b gezeigten Ausführungsbeispiele macht weiters deutlich, dass die Gleitfläche 18 mit der in Schubrichtung X direkt anschließenden Verbindungsfläche 24 am Schieberelement 16 einen Winkel α von etwa 45° bis etwa 90° und bis zu etwa 135° einschließt. Bei einem Winkel α von etwa 90° entsteht von der Seite betrachtet ein treppenstufenartiges Profil. Bei einem Winkel α von etwa 90° erinnert das Seitenprofil des Schieberelements 16 an ein Sägezahnprofil. Im Falle eines stumpfen Winkels α zwischen dem Versatz 22 und einer anschließenden Seite des Schieberelements 16, das Bestandteil der Führung 14 ist, bildet sich ein Profil mit geneigten Sägezähnen aus. Wie in Figur 2b ersichtlich, überlappen sich die Gleitflächen 18 dabei etwas und jeder Zahn bildet eine Art Endstück 13, das ein weiteres Vorschieben verhindert. Die auf einer Seite mit der Gleitfläche 18 oder dem Gleitlager versehenen Zähne greifen praktisch ineinander.

Die Ausführungsbeispiele der Figuren 2a und 2b machen deutlich, dass sowohl die Schieberelementaufnahme 12 als auch das Schieberelement 16 durch bloßes Aneinanderreihen von standardisierten Segmenten 26 in Form und Länge an den Einsatzort anpassbar ist. Dies erhöht vor allem die Freiheitsgrade in Bezug auf das Aufstellen des Keiltriebs 10 im Zyklenwerkzeug 200 und schafft die Möglichkeit einer "Verlängerung" des Metallbearbeitungswerkzeugs 100 bei in etwa gleichbleibendem Vorschub,

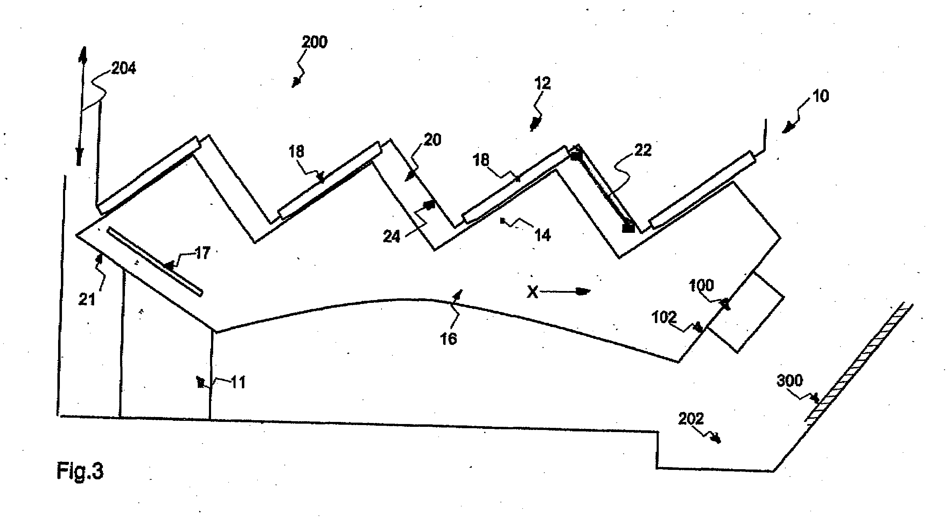

In Figur 3 ist ein Zyklenwerkzeug 200 zum Bearbeiten eines Werkstücks 300 gezeigt, das schematisch ein Stanz- und/oder ein Presswerkzeug in Startposition darstellt. Ein vom Metallbearbeitungswerkzeug 100 beim Arbeitstakt vom Werkstück 300 abgetrenntes Werkstückteil fällt in einen unterhalb des Werkstücks 300 angeordneten Schacht 202 des Zyklenwerkzeugs 200.

Das Metallbearbeitungswerkzeug 100 wird während des Arbeitstaktes von einem Keiltrieb 10 nach der vorliegenden Erfindung in Schubrichtung X vorgeschoben. Das Zyklenwerkzeug 200 ist in einer Startposition eines eine Hin- und eine Herbewegung umfassenden Zykluses gezeigt und bewegt sich dabei in Richtung des Werkzeughubs 204. Das zu bearbeitende Werkstück 300 ist bereits in einem ersten Teilzyklus in das Zyklenwerkzeug 200 eingebracht und an einer Seite abgestützt.

Der Keiltrieb 10 ist in etwa um die Breite des Schachts 202 vom Werkstück 300 beabstandet und innerhalb des Zyklenwerkzeugs 200 angeordnet, so dass ein Werkstückteil nach dem Arbeitstakt sicher in den Schacht 202 fällt. Beim Einwirken des Metallbearbeitungswerkzeugs 100 auf das Werkstück 300 überbrückt das Schieberelement 16 des Keiltriebs 10 dabei die Breite des Schachts (202) mindestens teilweise oder ganz.

Je nach Art und Größe des Metallbearbeitungswerkzeugs 100 erstreckt sich dabei die Führung 14 des Keiltriebs 10 mindestens bis zur Hälfte bis etwa 95% des Schachts 202. Dazu wird die Schieberelementaufnahme 12 des Keiltriebs 10 entsprechend verlängert und umfasst mehrere in Schubrichtung X hintereinander angeordnete Gleitflächen 14.

Die vorliegende Erfindung offenbart eine neuartige Form von Keiltrieben mit verlängerter und/oder verlängerbarer Führung für ein ein Metallbearbeitungswerkzeug tragendes Schieberelement. Schieberelement und Schieberelementaufnahme können dabei vor Ort im Zyklenwerkzeug auf die richtige Länge angepasst werden, zum Beispiel durch Kürzen einer entsprechend massenhaft und preisgünstig vorgefertigten Normalie.

Die erfindungsgemäßen technischen Merkmale können auch in einer anderen als der vorstehend beschriebenen Kombination zusammengefügt sein, ohne den Schutzbereich der vorliegenden Erfindung zu verlassen.

### Bezugszeichenliste

- 10: Keiltrieb
- 11: Treiber
- 12: Schieberelementaufnahme
- 13: Endstück
- 14: Führung
- 15: Seitenführung
- 16: Schieberelement
- 17: Kanal
- 19: Anlauf
- 18: Gleitfläche
- 20: Freiraum
- 21: Schubfläche
- 22: Versatz
- 24: Verbindungsfläche
- 26: Segment
- 28 30: Anschlag

- 100: Metallbearbeitungswerkzeug
- 102: Werkzeugplatte

- 200: Zyklenwerkzeug

- 202: Schacht
- 204: Werkzeughub
- 300: Werkstück

- X: Schubrichtung
- α: Winkel

## Patentansprüche

1. Keiltrieb (10) zum reversiblen Vorschieben eines Metallbearbeitungswerkzeugs (100), mit einer Schiebereiementaufnahme (12) und einer Führung (14) zum Vorschieben in Schubrichtung (X) eines das Werkzeug (100) abstützenden Schieberelements (16) in Bezug auf die Schieberelementaufnahme (12) auf einem vorbestimmten Weg, wobei die Führung (14) zum Abstützen des Schieberelements (16) eine in Schubrichtung (X) ausgerichtete Gleitfläche (18) aufweist,
**dadurch gekennzeichnet, dass**
die Führung (14) in Schubrichtung (X) gesehen mindestens zwei hintereinander angeordnete Gleitflächen (18) umfasst.

2. Keiltrieb (10) nach Anspruch 1, **dadurch gekennzeichnet, dass** ein Freiraum (20) zwischen zwei aufeinanderfolgenden und voneinander beabstandeten Gleitflächen (18) vorgesehen ist.

3. Keiltrieb (10) nach Anspruch 1 oder 2, **dadurch gekennzeichnet, dass** ein Versatz (22) zwischen den Gleitflächen (18) besteht, wobei die Gleitflächen (18) versetzt und in etwa parallel zur Schubrichtung (X) angeordnet sind.

4. Keiltrieb (10) nach einem der Ansprüche 1 bis 3, **dadurch gekennzeichnet, dass** der Freiraum (20) oder der Versatz (22) konstant ist oder zwischen mehreren aufeinanderfolgenden Gleitflächen (18) variiert.

5. Keiltrieb (10) nach einem der vorstehend genannten Ansprüche, **dadurch gekennzeichnet, dass** der Freiraum (20) oder der Versatz (22) von einer Verbindungsfläche (24) am Schieberelement (16) festgelegt ist.

6. Keiltrieb (10) nach Anspruch 5, **dadurch gekennzeichnet, dass** die Gleitfläche (18) mit der in Schubrichtung (X) direkt anschließenden Verbindungsfläche (24) am Schieberelement (16) einen Winkel (α) von etwa 45° bis etwa 90° und bis zu etwa 135° einschließt.

7. Zyklenwerkzeug (200) zum Bearbeiten eines Werkstücks (300), wobei ein vom Metallbearbeitungswerkzeug (100) beim Arbeitstakt vom Werkstück (300) abgetrenntes Werkstückteil in einen unterhalb des Werkstücks (300) angeordneten Schacht (202) des Zyklenwerkzeugs (200) fällt, wobei ein Keiltrieb (10) nach einem der vorstehend genannten Ansprüche in etwa um die Breite des Schachts (202) vom Werkstück (300) beabstandet innerhalb des Zyklenwerkzeugs (200) angeordnet ist, wobei beim Einwirken des Metallbearbeitungswerkzeugs (100) auf das Werkstück (300), das Schieberelement (16) des Keiltriebs (10) dabei die Breite des Schachts (202) mindestens teilweise, zur Hälfte oder ganz überbrückt.
